# EUROPÄISCHE PATENTSCHRIFT

(11) **EP 1 552 067 B1**
(45) Veröffentlichungstag und Bekanntmachung des Hinweises auf die Patenterteilung: **23.02.2011**
(21) Anmeldenummer: 03773522.2
(22) Anmeldetag: 09.10.2003
(51) Int. Cl.: E02D 17/20, E02B 3/12, C04B 20/10, C04B 41/47

(54) **Verwendung eines als Schüttgut vorliegenden Materials und Bauwerk, insbesondere Deich**
Use of a loose material and building material, in particular dyke
Utilisation de materière en vrac et D'OUVRAGES, NOTAMMENT DE DIGUE

(30) Priorität: 10.10.2002 DE 10247744
(43) Veröffentlichungstag der Anmeldung: 13.07.2005
(73) Patentinhaber: Hauke, Oskar, 34508 Willingen (DE)
(72) Erfinder: Hauke, Oskar, 34508 Willingen (DE)
(74) Vertreter: Dantz, Jan Henning
(86) Internationale Anmeldenummer: PCT/DE2003/003407
(87) Internationale Veröffentlichungsnummer: WO 2004/035943

(56) Entgegenhaltungen:
- WO-A-00/34587
- DE-A- 4 417 672
- GB-A- 370 878
- GB-A- 2 368 873
- RO-B- 113 460
- US-A- 2 056 387
- DATABASE WPI Section Ch, Week 198705 Derwent Publications Ltd., London, GB; Class L02, AN 1987-033939 XP002271412 & JP 61 291441 A (MATSUSHITA ELECTRIC WORKS LTD) 22. Dezember 1986 (1986-12-22)

## Beschreibung

Die Erfindung betrifft ein Baumaterial zur Errichtung oder Sanierung von Bauwerken, insbesondere Deichen, sowie Anwendungen des Baumaterials.

Zur Verhinderung von Überschwemmungen und Hochwasserschäden bei starken Niederschlägen, Schneeschmelzen od. dgl. ist es üblich, Schutzdämme in Form von permanenten Deichen vorzusehen. Insbesondere entlang von Flüssen sind derartige Deiche allerdings aufgrund zunehmender Bebauungen und aus zahlreichen anderen Gründen nicht immer erwünscht, insbesondere dann nicht, wenn das höchste zu erwartende Hochwasser permanente Deichanlagen von mehreren Metern Höhe erfordern würde.

Eine Folge fehlender Deiche ist die Überflutung ganzer Stadtteile und Landstriche, sofern im Fall eines kritischen Anstiegs des Wasserstandes nicht rechtzeitig Gegenmaßnahmen getroffen werden.

Eine allgemein bekannte, üblicherweise angewendete und vergleichsweise kostengünstige Maßnahme zur Vermeidung von Flutkatastrophen und durch diese bewirkten Hochwasserschäden ist das zeitweilige Errichten von Deichen mit Hilfe von mit Sand, Abfällen aus Beton od. dgl. gefüllten Säcken und anderen Behältern. Obgleich hierdurch ein wirksamer Schutz erzielt werden kann, ist es nicht selten, dass die errichteten Dämme einbrechen oder zumindest undicht werden. Ein Hauptgrund dafür besteht darin, das Wasser leicht in das aus Sand od. dgl. gebildete Schüttmaterial eindringen kann, dieses dann aufweicht und deformiert und dadurch letztendlich dem errichteten Schutzdamm zumindest lokal seine Dichtwirkung nimmt. Das gilt insbesondere dann, wenn zur Verpackung für das lose Schüttgut Säcke aus Jute oder anderen leicht verrottbaren Materialien eingesetzt werden. Eine Folge davon ist, dass mit Sandsäcken errichtete Schutzdämme od. dgl. ständig auf ihre Dichtwirkung hin überwacht und undichte Stellen sofort repariert werden müssen, wenn großflächige Deichbrüche vermieden werden sollen.

Ähnliche Nachteile ergeben sich beim Schutz und bei der Sanierung von Bauwerken wie z. B. unter Denkmalschutz stehenden Objekten. Es ist hierbei häufig erwünscht, mineralische, als Schüttgüter vorliegende Baumaterialien zu verwenden, die einerseits auch beim permanenten Einbau in Mauern, Wände od. dgl. unempfindlich gegen das Eindringen von Feuchtigkeit oder Nässe sind, andererseits kostengünstig hergestellt, eingebaut und verarbeitet werden können.

Die GB 370,878 offenbart ein Verfahren zum Schutz von pulverförmigen Material vor Flüssigkeit, wobei hierfür das pulverförmige Material beschichtet wird. Das beschichtete Material kann dann verarbeitet werden, wenn die Beschichtung Durch Mischen oder Rühren gelöst wird.

Die DE 44 17 672 offenbart ein Verfahren und eine Vorrichtung zur Errichtung von Gewässerschutzdämmen, bei dem ein Gewebeschlauch ausgelegt und dann pneumatisch befüllt wird. Der Gewebeschlauch wirkt dabei als Sieb, der die Masse filtert und im Innenraum sammelt.

Ausgehend davon liegt der vorliegenden Erfindung das technische Problem zugrunde, ein zur Herstellung oder Abdichtung bzw. Sanierung von Deichen und anderen wasserabweisenden oder wasserbewahrenden Bauwerken geeignetes Baumaterial vorzuschlagen, das sich wie Sand und vergleichbares Schüttmaterial verpacken und handhaben lässt, aber eine erheblich bessere Dichtwirkung und Widerstandsfähigkeit gegenüber Wasser mit sich bringt. Außerdem sollen Anwendungen und ein Verfahren zur Herstellung des Baumaterials vorgeschlagen werden.

Diese Aufgabe wird durch die Verwendung von Schüttgut gemäß dem Anspruch 1 sowie ein Bauwerk mit den Merkmalen des Anspruches 7 gelöst.

Zur Lösung dieses Problems wird ein Baumaterial vorgeschlagen, das im wesentlichen aus einem durch ein Hydrophobiermittel wasserabweisend gemachten Sand, Gesteinsmehl oder Gemisch von beiden besteht. Als Hydrophobiermittel kommen dabei vorzugsweise kostengünstiges Calciumstearat sowie Sojaöl oder Tallöl in Betracht.

Die Erfindung bringt den wesentlichen Vorteil mit sich, dass der Sand oder das Gesteinsmehl bzw. deren einzelne Körner aufgrund der mit einem Hydrophobiermittel erfolgten Oberflächenbehandlung wasserabweisend sind. Das bedeutet, dass Wassertropfen an den Körnern abtropfen, ohne sie zu benetzen, und mit derartigem Baumaterial gefüllte Behälter, insbesondere flexible Säcke, eine für Wasser nicht ohne weiteres durchdringbare Barriere bilden. Im Gegensatz zu normalem Sand weicht ein durch ein Hydrophobiermittel mit einer hydrophoben Beschichtung versehener Sand auch auf Dauer nicht in Wasser auf, so dass Dammbrüchen wirksam entgegengewirkt wird und Bauwerke vor dem Eindringen oder dem Auslaufen von Flüssigkeiten geschützt werden können. Dasselbe gilt bei Anwendung von hydrophob gemachtem Gesteinsmehl.

Weitere vorteilhafte Merkmale der Erfindung ergeben sich aus den Unteransprüchen.

Als Gesteinsmehl wird vorzugsweise Kalkstein verwendet. Das nach der Sprengung (z. B. Großbohrlochsprengung) erhaltene Haufwerk wird durch Felsmeißel od. dgl. grob zerkleinert und dann einer Brechanlage zugeführt. Dazu wird das zerkleinerte Material in einem z. B. mit Vibrationsrosten durchgeführten, ersten Reinigungsschritt einem Brecher zugeführt und über weitere Vibrationssiebe klassiert. Nach einer Feinvermahlung, z. B. mit einer Kugelmühle, erfolgt dann über Windsichter od. dgl. die Aufbereitung eines Feinmehls (z. B. 10 bis 40, um), das der Hydrophobierung zugeführt wird. Stark verunreinigtes Gesteinsmehl kann bei Bedarf vor der Hydrophobierung einem zweiten Reinigungsschritt unterworfen werden. Die Hydrophobierung bzw. Oberflächenbeschichtung einer gesamten Kornfraktion erfolgt dann in einer Mischanlage durch Zufügung von Stearaten (z. B. Calciumstearat) oder geeigneten Ölen. Das Hydrophobiermittel kann je nach Zusammensetzung in Pulverform oder in flüssiger, z. B. durch Vorwärmung auf 80 °C bis 100 °C erhaltener Form zugefügt werden. Entsprechend erfolgt die Herstellung von Baumaterialien aus anderen Gesteinen.

Eine ausreichende Hydrophobierung von Sand oder Gesteinsmehl tritt bereits ein, wenn der Anteil an Hydrophobiermitteln nur ca. 1 bis 2 Gew. % beträgt. Mit besonderem Vorteil wird dabei Sand oder Gesteinsmehl mit einer Korngröße von weniger als ca.

200 µm, d. h. feiner bis sehr feiner Sand bzw. feines bis sehr feines Gesteinsmehl angewendet. In diesem Fall wird ein sehr dichtes, kompaktes Baumaterial erhalten, das dem Wasser selbst bei Durchdringung einer etwa vorhandenen Verpackungsschicht einen hohen Strömungswiderstand entgegensetzt.

Außer Calciumstearat, Sojaöl und Tallöl, bei dem es sich um ein bei der Erzeugung von Zellstoff aus harzreichen Holzarten wie z. B. Fichte oder Kiefer anfallendes Nebenprodukt handelt, können natürlich auch andere für den genannten Zweck geeignete Hydrophobiermittel und/oder Mischungen der genannten oder anderer Hydrophobiermittel wie z. B. Rapsöl angewendet werden.

Die Herstellung des beschriebenen Baumaterials erfolgt vorzugsweise dadurch, daß vorgewählte Mengen an Sand und/oder Gesteinsmehl und Hydrophobiermittel eine ausreichende Zeitlang von z. B. 5 bis 20 Minuten in einem Mischer miteinander vermischt werden. Die dadurch bewirkte Oberflächenbehandlung der Sand- bzw. Gesteinsinehlkörner führt zu deren Hydrophobierung mit den angerührten Eigenschaften. Als Mischer wird vorzugsweise ein Zwangsmischer wie z. B. ein Gegenstrommischer verwendet.

### Beispiel

In einem Ausführungsbeispiel wurde als Ausgangsmaterial Sand verwendet. 50 kg dieses Sandes mit einer Korngröße von maximal 200 µm, die durch Klassierung des Sandes in einem Windsichter erhalten wurde, wurden mit 1 kg Galciumstearat in einem Zwangsmischer, dem eine in Vibration versetzbare Kugelfüllung beigegeben war, 10 Minuten lang behandelt. Als Ergebnis wurde ein hydrophobes, wasserabweisendes Schüttgut erhalten.

Die Mischdauer für die Oberflächenbehandlung sollte in Abhängigkeit von der verwendeten Korngröße gewählt werden und bei feinem Korn länger als bei grobem Korn sein.

Außer Sand (z.B. trockener Fluß-, Meeres- oder Wüstensand) können zahlreiche Gesteinsmehle (z.B. aus Marmor, Dolomit, Granit, Quarzit, Feldspat, Serpentin_{;} Basalt, Diabas, Baryt, Gips, Kreide oder Kaolin) angewendet werden, bei denen es sich durchweg um kristalline, natürliche Mineralien, aber nicht um amorphe Gesteinsgläser wie z.B. Perlit oder gar Blähperlit od. dgl. handelt.

Bei Anwendung eines flüssigen Hydrophobiermittels wie z. B. Tallöl, Rapsöl od. dgl. kann die flüssige Komponente auch durch Einsprühen in das Ausgangsmaterial eingebracht werden.

Das erfindungsgemäße Baumaterial wird vorzugsweise in gut handhabbaren Mengen in Säcke, in bei Bedarf in Segmente unterteilte Matten od. dgl. verpackt, die aus einem nicht verrottbaren Material wie z. B. Polyvinylchlorid-Folie bestehen und wie herkömmliche Sandsäcke zur Errichtung oder Ausbesserung von Deichen verwendet werden. Nach dem Zurückweichen des Hochwassers können die mit dem erfindungsgemäßen Baumaterial gefüllten Säcke wieder eingesammelt und gelagert werden. Die Gefahr der Verrottung ist dabei im Vergleich zur Anwendung von leicht verrottenden Jutesäcken, die außerdem vergleichsweise teuer sind, weitaus geringer.

Eine andere Anwendung des erfmdungsgemäßen Baumaterials kann darin bestehen, bereits vorhandene oder neu zu errichtende Deichanlagen oder ein anderes Bauwerk wie z. B. einen Schutzwall mit einem Kern aus dem hydrophobierten Baumaterial zu versehen. Ein bereits vorhandener Deich kann hierzu z. B. mit einem Tieflöffelbagger in der erwünschten Breite und Tiefe, die vorzugsweise bis unter den Grundwässerspiegel reicht, ausgehoben und dann mit einem hydrophobierten Sand oder Gesteinsmehl als Kernzone verfüllt werden. Die seitlichen Begrenzungen werden bei alten und neuen Anlagen zweckmäßig mit einer nicht oder nur schwer verrottbaren Folie (z. B. aus PVC) abgedeckt, ggf. mit zusätzlichen Stützelementen gesichert und anschließend in üblicher Weise bebaut. Zur Überwachung der Deichanlagen können außerdem zusätzlich VVasserstandsiriesser eingebaut werden. Dabei ist klar, daß das hydrophobierte Baumaterial mit Hilfe einer geeigneten Arbeitsmaschine auch in Form einer losen Schüttung, verpackt in vergleichsweise große Behälter oder in Form vergleichsweise großer, vorfabrizierter Bauelemente in die Deichanlagen eingebaut werden könnte. Außerdem können die Kernzonen zur Erdbebensicherung aus mehreren Schichten aufgebaut werden.

Abgesehen davon ist es in Abhängigkeit vom Anwendungszweck möglich, das beschriebene Baumaterial in Säcken aus verrottbaren, zumindest leicht porösen Stoffen, insbesondere solchen aus Jutegeweben od. dgl., anstatt in PVC-Säcken zu verpacken, insbesondere wenn ein späterer Ausbau mit nachfolgender Wiederverwendung nicht erforderlich ist. Vorteilhaft kann außerdem die Anwendung von Ventilsäcken sein, da in diesem Fall eine einfache, kostengünstige Befüllung an verschiedenen Orten und mit Füllmaschinen möglich ist, die in die Ventile einführbare Füllstutzen aufweisen. Die Anwendung poröser Verpackungen hat den Vorteil, daß das Baumaterial in dessen Poren eindringen und dadurch eine hydrophobe Wirkung auch an den Außenflächen der Verpackungen bewirken kann.

Eine weitere vorteilhafte Anwendung des erfindungsgemäßen Baumaterials ergibt sich unabhängig davon, ob es sich um durch Hochwasser gefährdete Gebiete handelt oder nicht, beim Bauten- bzw. Objekt- oder Denkmalschutz. Es ist dabei möglich, das beschriebene Baumaterial zu Platten, Flächenelementen (Rollbahnen) od. dgl. zu verpacken und in dieser Form nach Art von Bauelementen bzw. Bausteinen zur Errichtung von permanenten Mauern, Wänden od. dgl. zu verwenden. Außerdem kann das beschriebene Baumaterial in Hohlräumen von Bauwerken oder Untergründen davon eingebaut werden, indem es z. B. in eine flüssige oder staubige Form überführt und nach Art des Torkretierens mittels Druckluft od. dgl. in nicht oder nur schwer zugängliche Räume gepreßt wird, bei denen es sich auch um vorher angebrachte Bohrlöcher in zur sanierenden Bauwerken handeln kann.

Der Ausdruck "Deiche" soll im Rahmen der Erfindung alle für die genannten Zwecke geeigneten Arten von Schutzdämmen, Wällen od. dgl. einschließen, wobei gleichgültig ist, ob es sich um permanent eingerichtete Deichanlagen oder um nur kurzzeitig benötigte Schutzdämme handelt.

Die Erfindung ist nicht auf die beschriebenen Ausführungsbeispiele beschränkt, die auf vielfache Weise abgewandelt werden können. Das gilt insbesondere für die angegebenen Mengen an Hydrophobiermittel während der Oberflächenbehandlung. Je nach Art des Hydrophobiermittels und des gewünschten Ausmaßes der Hydrophobierung können dem im Mischer befindlichen Gemisch auch mehr oder weniger als 1 bis 2 Cew.% zugegeben werden. Außerdem kann die Hydrophobierung mit anderen als den angegebenen Verfahren und mit anderen als den angegebenen Hydrophöbierzinitteln erfolgen. Weiter kann das erfindungsgemäße Baumaterial außer in versackter Form oder anderswie verpackter Form auch in gebrannter Form verwendet werden, indem es z. B. in geeignete Formen zu festen Bauteilen geformt und dann gebrannt wird. Außerdem versteht sich, daß die verschiedenen Merkmale auch in anderen als den beschriebenen Kombinationen angewendet werden können.

## Patentansprüche

1. Verwendung eines als Schüttgut vorliegenden Materials, das im wesentlichen aus einem durch Oberflächenbehandlung mit einem Hydrophobiermittel wasserabweisend gemachten Sand und/oder Gesteinsmehl besteht, zur Errichtung oder Sanierung von Deichen.

2. Verwendung nach Anspruch 1, **dadurch gekennzeichnet, dass** das Material als in einen Behälter gefüllten Schüttgut vorliegt.

3. Verwendung nach Anspruch 2, **dadurch gekennzeichnet, dass** das Material in einen Sack aus einem flexiblen Kunststoff, insbesondere Polyvinylchlorid, verpackt ist.

4. Verwendung nach Anspruch 2 oder 3, **dadurch gekennzeichnet, dass** der Behälter ein Ventilsack ist.

5. Verwendung nach einem der Ansprüche 1 bis 4, **dadurch gekennzeichnet, dass** der Behälter aus einem porösen Material hergestellt ist.

6. Verwendung nach einem der Ansprüche 1 bis 5, **dadurch gekennzeichnet, dass** als Hydrophobiermittel Calciumstearat, Sojaöl oder Tallöl eingesetzt wird.

7. Bauwerk, insbesondere Deich, **dadurch gekennzeichnet, dass** es zumindest eine zum Schutz vor dem Eindringen von Flüssigkeit bestimmte Kernzone enthält, die aus einem als Schüttgut vorliegenden Baumaterial hergestellt ist, das im wesentlichen aus einem durch eine Oberflächenbehandlung mit einem Hydrophobiermittel wasserabweisend gemachten Sand und/oder Gesteinsmehl besteht.

8. Bauwerk nach Anspruch 7, **dadurch gekennzeichnet, dass** das Baumaterial in Behältern abgepackt ist.

9. Bauwerk nach Anspruch 8, **dadurch gekennzeichnet, dass** der Behälter nach einem der Ansprüche 3 bis 5 ausgebildet ist.

10. Bauwerk nach einem der Ansprüche 7 bis 9, **dadurch gekennzeichnet, dass** es eine Mauer oder Wand enthält, die mit Hilfe von Bauelementen errichtet ist, die aus dem zu Platten oder Rollbahnen verpackten Baumaterial bestehen.

11. Bauwerk nach einem der Ansprüche 7 bis 10, **dadurch gekennzeichnet, dass** das Baumaterial in einem Hohlraum oder Untergrund eingebaut ist.

## Claims

1. Use of a bulk material substantially consisting of a sand and/or powdered mineral which has been rendered water-repellent by means of a surface treatment with a hydrophobing agent for erecting or restoring a dike or levee.

2. Use of the bulk material according to claim 1 in the form of a bulk material filled into a receptacle.

3. Use according to claim 1 or 2, wherein said bulk material is packaged into a bag made of a flexible plastic material, particularly made of polyvinyl chloride.

4. Use according to one of claims 2 or 3, wherein the receptacle is a valve bag.

5. Use according to one of claims 1-4, wherein the receptacle is made of a porous material.

6. Use according to one of claims 1-5, wherein the hydrophobing agent is calcium stearate, tall oil or rape oil.

7. A Building structure, particularly a dike or levee, comprising at least one core zone for the protection against penetration of liquid, wherein said core zone is made of a bulk material substantially consisting of a sand and/or powdered mineral which has been rendered water-repellent by means of a surface treatment with a hydrophobing agent.

8. Building structure according to claim 7, wherein the bulk material is packaged in receptacles.

9. Building structure according to claim 8, wherein the receptable is designed according to one of claims 3-5.

10. Building structure according to one of claims 7 to 9 comprising a wall being erected by means of structural elements consisting of the bulk material being packaged in the form of plates or rolls.

11. Building structure according to one of claims 7 to 10, wherein the bulk material is inserted into a cavity or a subsoil.

## Revendications

1. Utilisation d'un matériau se présentant sous forme de matière en vrac, lequel se compose essentiellement de sable et/ou roche pulvérisée rendus hydrofuges par un traitement de surface avec un produit d'imperméabilisation, pour construire ou restaurer des digues.

2. Utilisation selon la revendication 1, **caractérisée en ce que** le matériau se présente sous forme de matière en vrac remplissant un conteneur.

3. Utilisation selon la revendication 2, **caractérisée en ce que** le matériau est emballé dans un sac en une matière synthétique souple, en particulier du chlorure de polyvinyle.

4. Utilisation selon la revendication 2 ou 3, **caractérisée en ce que** le conteneur est un sac à valve.

5. Utilisation selon l'une quelconque des revendications 1 à 4, **caractérisée en ce que** le conteneur est fabriqué avec un matériau poreux.

6. Utilisation selon l'une quelconque des revendications 1 à 5, **caractérisée en ce que** l'on utilise du stéarate de calcium, de l'huile de soja ou du tall oil en tant que produit d'imperméabilisation.

7. Ouvrage, en particulier digue, **caractérisé en ce qu'**il comprend au moins une zone centrale déterminée pour la protection contre la pénétration de liquide, laquelle zone est fabriquée avec un matériau de construction se présentant sous la forme d'une matière en vrac, lequel matériau se compose essentiellement de sable et/ou roche pulvérisée rendus hydrofuges par un traitement de surface avec un produit d'imperméabilisation.

8. Ouvrage selon la revendication 7, **caractérisé en ce que** le matériau de construction est emballé dans des conteneurs.

9. Ouvrage selon la revendication 8, **caractérisé en ce que** le conteneur est réalisé selon l'une quelconque des revendications 3 à 5.

10. Ouvrage selon l'une quelconque des revendications 7 à 9, **caractérisé en qu'**il comprend une muraille ou un mur construit(e) à l'aide d'éléments de construction, lesquels se composent du matériau de construction emballé sous forme de plaques ou bandes enroulées.

11. Ouvrage selon l'une quelconque des revendications 7 à 10, **caractérisé en ce que** le matériau de construction est intégré dans un espace creux ou un sous-sol.
